Europäisches Patentamt

European Patent Office

Office européen des brevets

(11) Publication number: **0 209 332**
**B1**

# EUROPEAN PATENT SPECIFICATION

(45) Date of publication of the patent specification:
14.06.89

(51) Int. Cl.⁴: **C01B 33/28**

(21) Application number: **86305344.3**

(22) Date of filing: **11.07.86**

(54) Synthesising faujasites.

(30) Priority: **17.07.85 GB 8517997**

(43) Date of publication of application:
**21.01.87 Bulletin 87/4**

(45) Publication of the grant of the patent:
**14.06.89 Bulletin 89/24**

(84) Designated Contracting States:
**AT BE CH DE FR IT LI LU NL SE**

(56) References cited:
**EP-A- 0 204 455**
**FR-A- 1 281 545**
**FR-A- 2 108 479**
**US-A- 4 228 137**

(73) Proprietor: **ECC INTERNATIONAL LIMITED, John Keay House, St. Austell Cornwall PL25 4DJ(GB)**

(72) Inventor: **Reid, Paul Ian, Carpalla Cottage Carpalla Road, Foxhole St. Austell Cornwall(GB)**

(74) Representative: **Bull, Michael Alan et al, Haseltine Lake & Co. Hazlitt House 28 Southampton Buildings Chancery Lane, London WC2A 1AT(GB)**

## Description

BACKGROUND OF THE INVENTION

This invention relates to a method of synthesising zeolites of the faujasite type, for example zeolites X and Y, and more particularly is concerned with a method of synthesising zeolites of the faujasite type from metakaolin.

British Patent Specification No. 777233 describes a method for synthesising zeolite X using as the reaction mixture a sodium aluminium silicate gel prepared by mixing together compounds which are sources of oxides of silicon, aluminium and sodium with water. The crystallisation of the zeolite X is effected without agitation at around 100°C.

British Patent Specification No. 909266 describes the synthesis of zeolite Y from a sodium aluminium silicate gel. Again, the formation and crystallisation of the zeolite are effected without agitation, the reaction mix being sealed in a glass reaction vessel and placed in a steam bath at 100°C.

British Patent Specification No. 1132096 describes a process for producing a crystalline zeolite of the faujasite type using metakaolin as the source of aluminium oxide and of at least part of the silicon oxide. The metakaolin is contacted with an aqueous mineral acid so as to increase the silica: alumina molar ratio to a value in the range of 6 to 270, the product is separated by filtration, washed and dried, and then fired a second time. The metakaolin thus treated is then formed into a reaction mixture with water and sodium hydroxide, and the reaction mixture is then subjected to a two-stage process. In the first stage, the mixture is aged at around room temperature for 24 hours with agitation, and in the second stage the temperature is increased to a value in the range of from 75°C to 120°C and maintained at this temperature under static conditions for 72 hours.

In British Patent Specification No. 980 891, there is disclosed a method for producing zeolite molecular sieves A, X or Y which comprises forming an aqueous reactant mixture having an initial overall composition defined in oxide mole ratios as follows:

$R_2O/SiO_2 = a$

$SiO_2/Al_2O_3 = b$

$H_2O/R_2O = c$

wherein the values of a, b and c are the essential determinants for the type of crystalline zeolitic molecular sieve desired and R is an alkali metal, the major source of aluminum oxides for Zeolites X and Y, and the major source of both aluminium and silicon oxides for Zeolite A being provided by inclusion in the reaction mixture of a reactive kaolin-type clay rendered amorphous to X-ray diffraction by calcining at a temperature of from 600°C to 850°C for a period of at least 45 minutes. The aqueous reactant mixture is digested for a period of at least two hours and thereafter is thermally treated at an elevated temperature and under at least autogenous pressure until the crystals form.

It has been found that if a sodium aluminium silicate gel is stirred during the crystallisation stage for any length of time and with any degree of vigour the formation of faujasite zeolites is hindered and a zeolite known as zeolite P, which is of very little commercial value, tends to crystallise instead. It has hitherto been thought that the effect of stirring a reaction mixture comprising metakaolin as a source of silica and alumina would be the same as that of stirring a sodium aliminium silicate gel.

SUMMARY OF THE INVENTION

According to the present invention there is provided a method of preparing a zeolite of the faujasite type characterised in that a mixture comprising a metakaolin (which is the product of calcining a kaolin at a temperature not above 925°C), a source of sodium oxide and water, the molar ratio of $SiO_2 : Al_2O_3$ in the mixture being adjusted to lie in the range of from 2.1 : 1 to 15 : 1 and the molar ratio of $H_2O : Na_2O$ in the mixture being adjusted to be in the range of from 15 : 1 to 70 : 1, is maintained at a temperature and for a period of time sufficient to result in the formation of crystalline faujasite, in that the reaction mixture is agitated substantially continuously throughout the reaction period, and in that substantially pure faujasite is recovered as product.

The method of the present invention yields a product which is of uniform composition and which has a particle size distribution which closely reflects that of the starting metakaolin. In addition, the method of the invention makes it possible to reduce the water content of the reaction mixture for preparing faujasites, as compared with previously known methods, and thus increase the throughput of an existing manufacturing plant.

The metakaolin, which is the product of calcining kaolinite, $Al_2O_3.2SiO_2.2H_2O$, relatively lightly so as to drive off the chemically bound water to give a product of formula $Al_2O_3.2SiO_2$, is preferably prepared by subjecting kaolin, containing at least 90% by weight of kaolinite, in the form of a powder, granules or spray-dried microspheres, to a temperature in the range of from 550°C to 925°C for a time such that the product, on further heating to a temperature of 1100°C for 2 hours, shows a loss in weight of less than 1%.

The reaction mixture preferably also comprises a previously prepared zeolite initiator, or "seed", mixture which comprises sources of the oxides of aluminium, silicon and sodium and water in appropriate proportions. Conveniently the initiator mixture comprises sodium silicate, sodium aluminate, sodium hydroxide and water. The purpose of the initiator mixture is to form minute nuclei of the desired faujasite which will promote the crystallisation of the faujasite from the main reaction mass. Instead of or in addition to adding the zeolite initiator mixture, the whole reaction mass can be "aged" for a period in the range of from about 5 to about 24 hours at a temperature in the range of from 20°C to 55°C, in accordance with the teaching of British Patent Specification No. 1132096, to form the faujasite nuclei in situ.

The molar ratio of $SiO_2:Al_2O_3$ in the reaction mixture may be adjusted to lie in the desired range by adding a source of additional silicon dioxide which may be, for example, sodium silicate, silica sol or silica gel. Sodium silicate solution is especially preferred Alternatively, the reaction mixture may contain a metakaolin, the $SiO_2:Al_2O_3$ molar ratio of which has been adjusted by treating the metakaolin with an acid to dissolve at least part of the aluminium oxide in the manner disclosed in British Patent Specification No. 1132096 or in British Patent Specification No. 2101110.

The composition of the reaction mixture necessary to produce zeolite X is similar to that of the sodium aluminium silicate gel which is disclosed in British Patent Specification No. 777233. Typical ranges for the three important molar ratios are as follows:

|  | Molar Ratio |
|---|---|
| $SiO_2/Al_2O_3$ | 3–8/1 |
| $Na_2O/Al_2O_3$ | 2–4.5/1 |
| $H_2O/Na_2O$ | 15–70/1 |

Likewise, the composition of the reaction mixture necessary to produce zeolite Y is similar to that of the sodium aluminium silicate gel which is disclosed in British Patent Specification No. 909266. Typical ranges for the same three molar ratios are as follows:

|  | Molar Ratio |
|---|---|
| $SiO_2/Al_2O_3$ | 6–10/1 |
| $Na_2O/Al_2O_3$ | 2–4/1 |
| $H_2O/Na_2O$ | 15–70/1 |

The molar ratio of $H_2O/Na_2O$ should preferably be in the range 15-55/1 for both zeolite X and zeolite Y.

The reaction mixture is preferably reacted at a temperature in the range of from 75°C to 120°C for a period of time in the range of from 10 to 48 hours.

The method of the invention, wherein the reaction mixture consists predominantly of metakaolin and is agitated substantially continuously throughout the reaction period, has the following advantages as compared with the known methods:

1. It is possible to use a reaction mixture containing a smaller amount of water than is necessary when a sodium aluminium silicate gel is used, such as is disclosed in British Patent Specifications Nos. 777233 and 909266. The throughput of existing manufacturing plant can be increased substantially if the method of the invention is used as compared with a method wherein the reaction mixture comprises a sodium aluminium silicate gel.

2. The formation of aggregates during the crystallisation step is minimised.The method of the invention yields a product the particle size distribution of which reflects the particle size distribution of the metakaolin. It follows that if a faujasite having particles of a particular size and shape is required for use, for example, in a fixed or fluidised bed, it is sufficient to provide a metakaolin which has particles of the desired size and shape. Useful faujasite products may be formed by providing the metakaolin in the form of granules or of spray-dried microspheres.

3. As a consequence of the agitation a uniform temperature is maintained throughout the reaction mixture. The crystallisation of the faujasite therefore proceeds uniformly and rapidly with substantially no variation in composition of the product within a particular reaction mixture.

EMBODIMENTS OF THE INVENTION

The invention is illustrated by the following Examples.

EXAMPLE 1

A sample of kaolin clay, having a particle size distribution such that 80% by weight consisted of particles having an equivalent spherical diameter smaller than 2 um, was calcined in a muffle furnace at 800°C for 3 hours to form metakaolin which showed a weight loss of less than 1% by weight when further calcined at a temperature of 1100°C for 2 hours.

1.67Kg of the metakaolin was then dispersed in 8.82 Kg of water. 10.1 Kg of a sodium silicate solution containing 39.3% by weight of solid sodium silicate having a molar ratio of $SiO_2:Na_2O$ of 3.2:1, and 2.5 Kg of an initiator mixture consisting of sodium silicate, sodium aluminate, sodium hydroxide and water, was then added to the aqueous supension of metakaolin to give reaction mass with the composition:
$9 SiO_2:Al_2O_3:2.6Na_2O:120H_2O$

The mixture was charged into a 20 litre glass vessel and heated to 95°C for 16 hours. The mixture was stirred throughout the reaction by means of a paddle stirrer revolving at 60 rpm. The product was filtered, washed with water and dried in an oven at 95°C.

X-ray diffraction analysis of the product showed it to be substantially pure zeolite Y with a molar ratio of $SiO_2:Al_2O_3$ of 4.6:1. No zeolite P was detected and the product was in the form of an unaggregated powder having an average particle size of 3um.

EXAMPLE 2 (COMPARATIVE)

An aluminosilicate gel of composition:
$9 SiO_2:Al_2O_3:2.6Na_2O:120H_2O$
was prepared in accordance with the method disclosed in British Patent Specification No. 909266 by mixing together 1.23 Kg of sodium aluminate, 8.535 Kg of water, 5.11 Kg of the same sodium silicate solution as was used in Example 1, 5.765 Kg of "LUDOX HS-40" silica sol and 2.5 Kg of the same initiator as was used in Example 1.

A portion of the aluminosilicate gel was charged into polypropylene pots which were then sealed and placed in an oven at 95°C for 16 hours. The product was filtered, washed with water and dried in an oven at 95°C and was found by x-ray diffraction analysis to be substantially pure zeolite Y with a molar ratio of $SiO_2:Al_2O_3$ of 4.9:1.

A further portion of the same aluminosilcate gel was charged into a 20 litre heated glass vessel and reacted for 16 hours at 95°C with constant stirring with a paddle stirrer revolving at 60 rpm. The product was filtered, washed with water and dried in an oven at 95°C and was found by X-ray diffraction analysis to consist predominantly of zeolite P with only 10% by weight of zeolite Y present.

These results show that a good quality zeolite Y can be prepared from an aluminosilicate gel in accordance with British Patent Specification No. 909266 provided that the gel is not stirred. If the gel is stirred in the manner required by the present invention the product contains only a very small proportion by weight of zeolite Y, the remainder consisting of products of little commercial value.

EXAMPLE 3 (COMPARATIVE)

The experiment of Example 1 was repeated except that the mixture of metakaolin, water, sodium silicate solution and initiator was not stirred but instead was charged into polypropylene pots which were sealed and placed in an oven at 95°C for 16 hours.

The product was filtered, washed with water, and dried in an oven at 95°C and was found by X-ray diffraction analysis to be substantially pure zeolite Y. However in this case the product was severely aggregated and it was necessary to grind it before the last traces of the mother liquor could be washed away.

EXAMPLE 4

1.67 Kg of the metakaolin prepared in Example 1 was dispersed in 4.6 Kg of water. 10.1 Kg of the same sodium silicate solution as was used in Example 1 and 2.5 Kg of the same initiator mixture were then added to the aqueous suspension of metakaolin to give a reaction mass with the composition:
$9SiO_2:Al_2O_3:2.6Na_2O:9OH_2O$

The mixture was charged into a 20 litre glass vessel and heated to 95°C for 16 hours, the mixture being stirred throughout the reaction by means of a paddle stirrer revolving at 60 rpm.

The product was filtered, washed with water and dried in an oven at 95°C and was found by X-ray diffraction analysis to consist of substantially pure zeolite Y.

This example shows that it is possible by the method of the invention to prepare a good quality zeolite Y from a reaction mixture containing a relatively small amount of water as compared with prior art methods.

EXAMPLE 5

1.67 Kg of the metakaolin prepared as described in Example 1 was dispersed in 1.433 Kg of water. 0.742 Kg of the same sodium silicate solution as was used in Example 1 and 2.5 Kg as initiator mixture comprising sodium silicate, sodium aluminate, sodium hydroxide and water, were then added to the aqueous suspension of metakaolin to form a reaction mass with the composition:
$3SiO_2:Al_2O_3:2.3Na_2O:120H_2O$

The mixture was charged in a 20 litre glass vessel and heated to 95°C for 16 hours. The mixture was agitated throughout the reaction by means of a paddle stirrer revolving at 95°C.

The product was filtered, washed with water and dried in an oven at 95°C and was found by X-ray diffraction to be substantially pure zeolite X having a molar ratio of $SiO_2:Al_2O_3$ of 2.2:1.

EXAMPLE 6

A kaolin clay having a particle size distribution such that 96% by weight consisted of particles having an equivalent spherical diameter smaller than 2um was mixed with sufficient water to form a suspension containing 65% by weight of dry kaolin and with 0.6% by weight, based on the weight of dry kaolin, of a sodium silicate solution containing 28.1% by weight of solid sodium silicate having a molar ratio of $SiO_2:Na_2O$ of 3.2:1 as a dispersing agent. The resultant supension was spray dried to form kaoling microspheres of average particle diameter about 65um. These microspheres were calcined in a muffle furnace at 800°C for 3 hours to produce hard, spherical particles of metakaoling having an average particle diameter of about 65um.

1.67 Kg of the metakaolin microspheres was dispersed in 8.82 Kg of water. 10.1 Kg of the same sodium silicate solution as was used in Example 1 and 2.5 Kg of the same initiator mixture were then added to the aqueous suspension of metakaolin to give a reaction mass with the composition:
$9siO_2:Al_2O_3:2.6Na_2O:120H_2O$

The mixture was charged into a 20 litre glass vessel and heated to 95°C for 16 hours. The mixture was stirred throughout the reaction by means of a paddle stirrer revolving at 60 rpm. The product was filtered, washed with water and dried in an oven at 95°C and was found to contain 92% by weight of zeolite Y having an $SiO_2:Al_2O_3$ molar ratio of 4.9:1. The product was in the form of zeolite microspheres of average diameter about 65um and was found to be useful as a catalyst and as an adsorbent.

EXAMPLE 7

1.0 kg of the metakaolin prepared in Example 1 was dispersed in a mixture comprising 2.24 kg of water, 4.0 kg of the same sodium silicate solution as was used in Example 1 and 0.143 kg of sodium hydroxide. The resultant metakaolin-containing mixture was stirred for 5 minutes and 1.5 kg of the same initiator mixture as was used in Example 1 was then added to the aqueous suspension of metakaolin to give a reaction mass with the composition:
$7 SiO_2Al_2O_3:2.3Na_2O:7OH_2O$
The molar ratio $H_2O:Na_2O$ was thus 30:1.

The mixture was charged into a 20 litre glass reaction vessel and heated to 95°C for 14 hours, the mixture being stirred throughout the reaction by means of a paddle stirrer rotating at 100 rpm.

The product obtained was filtered, washed with water and dried in an oven at 95°C and was found by X-ray diffraction to contain 97% by weight of zeolite Y having an $SiO_2:Al_2O_3$ molar ratio of 4.8:1. The product was also found to be substantially completely free of aggregates but had substantially the same particle size distribution a the initial metakaolin.

## Claims

1. A method of preparing a zeolite of the faujasite type characterised in that a mixture comprising a metakaolin (which is the product of calcining a kaolin at a temperature not above 925°C), a source of sodium oxide and water, the molar ratio of $SiO_2 : Al_2O_3$ in the mixture being adjusted to lie in the range of from 2.1 : 1 to 15 : 1 and the molar ratio of $H_2O :$ $Na_2O$ in the mixture being adjusted to be in the range of from 15 : 1 to 70 : 1, is maintained at a temperature and for a period of time sufficient to result in the formation of crystalline faujasite, in that the reaction mixture is mechanically agitated substantially continuously throughout the reaction period, and in that substantially pure faujasite is recovered as product.

2. A method according to Claim 1, characterised in that the mixture also comprises a previously prepared zeolite initiator mixture which comprises sources of the oxides of aluminium, silicon and sodium and water in appropriate proportions.

3. A method according to Claim 1 or 2, characterised in that the whole reaction mass is "aged" for a period in the range of from about 5 hours to about 24 hours at a temperature in the range of from 20°C to 55°C.

4. A method according to Claim 1, 2 or 3, characterised in that the reaction mixture is maintained at a temperature in the range of from 75°C to 120°C for a period in the range of from 10 hours to 48 hours.

## Patentansprüche

1. Verfahren zum Herstellen eines Zeoliths vom Faujasittyp, dadurch gekennzeichnet, daß ein ein Metakaolin (welches das Produkt des Calcinierens eines Kaolins bei einer 925°C nicht übersteigenden Temperatur ist), eine Quelle von Natriumoxid und Wasser enthaltendes Gemisch, in welchem das Molverhältnis $SiO_2 : Al_2O_3$ auf einen Wert im Bereiche von 2,1 : 1 bis 15 : 1 und das Molverhältnis $H_2O :$ $Na_2O$ auf einen Wert im Bereiche von 15 : 1 bis 70 : 1 eingestellt wird, auf einer zum Entstehen von kristallinem Faujasit ausreichenden Temperatur während einer hiefür ausreichenden Zeit gehalten wird, daß das Reaktionsgemisch während der gesamten Umsetzungsdauer im wesentlichen dauernd mechanisch durchbewegt wird und daß als Produkt im wesentlichen reiner Faujasit gewonnen wird.

2. Verfahren nach Anspruch 1, dadurch gekennzeichnet, daß das Gemisch weiters ein zuvor hergestelltes Zeolithinitiatorgemisch enthält, in welchem die Oxide von Aluminium, Silizium und Natrium und Wasser in geeigneten Mengenanteilen vorliegen.

3. Verfahren nach Anspruch 1 oder 2, dadurch gekennzeichnet, daß die gesamte Reaktionsmasse während eines Zeitraumes von etwa 5 h bis etwa 24 h bei einer Temperatur im Bereiche von 20°C bis 55°C "gealtert" wird.

4. Verfahren nach Anspruch 1, 2 oder 3, dadurch gekennzeichnet, daß das Reaktionsgemisch während eines im Bereiche von 10 h bis 48 h liegenden Zeitraumes auf einer Temperatur im Bereiche von 75°C bis 120°C gehalten wird.

## Revendications

1. Procédé de préparation d'une zéolite du type faujasite, caractérisé en ce qu'un mélange comprenant un métakaolin (qui est le produit de la calcination d'un kaolin à une température non supérieure à 925°C), une source d'oxyde de sodium et de l'eau, le rapport molaire de $SiO_2 : Al_2O_3$ dans le mélange étant ajusté de façon à se situer dans l'intervalle de 2,1 : 1 à 15 : 1 et le rapport molaire de $H_2O : Na_2O$ dans le mélange étant ajusté de façon à situer dans l'intervalle de 15 : 1 à 70 : 1, est maintenu à une température et pendant une période de temps suffisantes pour aboutir à la formation de faujasite cristalline, en ce que le mélange réactionnel est agité mécaniquement à peu près continuellement durant toute la période de réaction, et en ce que de la faujasite à peu près pure est recueillie comme produit.

2. Procédé selon la revendication 1, caractérisé en ce que le mélange comprend également un mélange initiateur de zéolite préalablement préparé qui comprend des sources des oxydes d'aluminium, de silicium et de sodium, et de l'eau, en des proportions appropriées.

3. Procédé selon la revendication 1 ou 2, caractérisé en ce que le mélange réactionnel total est "vieilli" pendant une période comprise entre environ 5 heures et environ 24 heures à une température située dans la plage de 20°C à 55°C.

4. Procédé selon la revendication 1, 2 ou 3, caractérisé en ce que le mélange réactionnel est maintenu à une température située dans la plage de 75°C à 120°C pendant une période comprise entre 10 heures et 48 heures.